# DEMANDE DE BREVET EUROPEEN

(11) **EP 1 097 906 A1**
(43) Date de publication de la demande: **09.05.2001**
(21) Numéro de dépôt: 00402791.8
(22) Date de dépôt: 10.10.2000
(51) Int. Cl.: C02F 1/52, C02F 1/56, C02F 1/38, C02F 1/44

(54) **Procédé pour éliminer les particles solides, notamment de silice et/ou d'alumine, d'effuents aqueux**

(30) Priorité: 03.11.1999 FR 9913720
(71) Demandeur: Air Liquide Electronics Systems, 75007 Paris (FR)
(72) Inventeur: Dulphy, Hervé, 75321 Paris Cedex 07 (FR); Ancel, Dominique, 75321 Paris Cedex 07 (FR)
(74) Mandataire: Vesin, Jacques

(57) **Abrégé**

La présente invention concerne le traitement d'effluents (12) sous forme de suspension aqueuse de particules solides, notamment de silice et/ou d'alumine. La suspension aqueuse (12) est additionnée de chaux (13) puis d'agent floculant (14). Les particules solides (26) sont ensuite séparées dans une centrifugeuse (7) et évacuées. Le liquide séparé (18) est éventuellement neutralisé et traité dans un système d'ultrafiltration (20) pour conduire à une phase aqueuse purifiée (30).

Application à l'industrie microélectronique.

## Description

La présente invention concerne le traitement d'effluents, en particulier issus de l'industrie de la micro-électronique, en vue de leur rejet ou de leur recyclage dans un autre procédé industriel.

D'une manière plus spécifique, la présente invention concerne l'élimination des particules solides, en particulier des particules de silice et/ou d'alumine contenues dans de tels effluents.

L'usage de suspensions de silice ou d'alumine pour le polissage de tranches de silicium dans l'industrie de la micro-électronique tend à se généraliser.

Il est nécessaire de traiter les effluents résultants afin de pouvoir les rejeter sans polluer l'environnement ou encore de les réutiliser dans d'autres procédés industriels.

Pour cela, l'industrie de la micro-électronique est actuellement équipée de stations de neutralisation et éventuellement de bacs de décantation.

Les suspensions devant être traitées posent néanmoins des problèmes liés à leurs caractéristiques physico-chimiques qui concourent à les rendre facilement solidifiables.

On observe ainsi la formation de dépôts dans les cuves de neutralisation et les bacs de décantation, dépôts qu'il faut régulièrement éliminer ce qui implique la mise hors service de ces équipements.

D'une manière plus spécifique, les systèmes de traitement utilisés jusqu'alors comprennent l'ultrafiltration et l'utilisation d'un filtre-presse.

L'ultrafiltration est efficace essentiellement pour des suspensions contenant une faible quantité de particules solides. En effet, lorsque la concentration en particules solides devient importante, les filtres se bouchent très vite. Le coût de maintenance des installations est ainsi très élevé ce qui constitue un inconvénient majeur de cette technique.

En outre, du fait de la nécessité du nettoyage périodique des filtres, ce traitement ne peut être mis en oeuvre que de manière discontinue.

Par ailleurs, une partie des effluents récupérés en sortie de l'ultrafiltration est enrichie en particules solides et nécessite encore un nouveau traitement avant rejet. Le traitement de ce concentrat issu de l'ultrafiltration est habituellement réalisé dans un filtre-presse ou éventuellement par centrifugation.

Le filtre-presse présente l'inconvénient d'être un procédé fonctionnant en discontinu et qui nécessite une opération de nettoyage systématique.

Un objectif de la présente invention est de fournir un procédé pour épurer des suspensions aqueuses contenant des particules solides, en particulier des particules de silice et/ou d'alumine, jusqu'à un degré acceptable pour permettre leur rejet sans polluer l'environnement ou leur recyclage et qui ne présente pas les inconvénients précités.

Un autre objectif de l'invention est de fournir un procédé simple qui puisse être mis en oeuvre à moindre coût.

Un objectif de l'invention est encore de fournir un tel procédé qui puisse être mis en oeuvre en continu.

Ces objectifs ainsi que d'autres sont atteints à l'aide d'un procédé pour la séparation des particules solides, notamment des particules de silice et/ou d'alumine, en suspension dans un effluent aqueux, caractérisé en ce qu'il comprend les étapes consistant à :
- ajouter de la chaux en poudre à la suspension aqueuse de particules solides ;
- ajouter un agent floculant de type polymère à la suspension aqueuse traitée à la chaux ;
- séparer par centrifugation les particules solides agglomérées de la phase aqueuse ;

= récupérer le liquide séparé résultant de la centrifugation pour produire un effluent épuré ;
= évacuer les particules solides séparées par la centrifugation.

Selon d'autres caractéristiques de l'invention :
- l'effluent épuré issu de la centrifugation peut être neutralisé ;
- l'effluent épuré, éventuellement neutralisé, peut être soumis à une purification supplémentaire par ultrafiltration.

La présente invention concerne également une installation pour la mise en oeuvre du procédé précité, caractérisé en ce qu'il comprend :
- une cuve de réception de la suspension aqueuse de solides à traiter, équipée de moyens d'agitation ;
- une cuve de chaux ;
- des moyens d'amenée de la chaux dans la suspension aqueuse ;
- une cuve contenant un agent floculant polymère ;
- des moyens d'amenée de l'agent floculant dans la suspension aqueuse traitée à la chaux ;
- une centrifugeuse ;
- des moyens d'amenée de la suspension aqueuse traitée à la chaux et par l'agent floculant dans la centrifugeuse ;
- une cuve de récupération du liquide séparé ;
- des moyens de récupération des solides séparés par la centrifugeuse.

Selon d'autres caractéristiques de l'invention, l'installation comprend en outre :
- une station de dilution et maturation de l'agent floculant polymère, reliée à la cuve contenant cet agent ;
- une cuve de neutralisation et des moyens d'amenée de la splution de neutralisation dans le liquide séparé issu de la centrifugation ;
- un système d'ultrafiltration ainsi que des moyens d'amenée du liquide séparé audit système d'ultrafiltration.

Les inventeurs ont montré de manière inattendue que l'on pouvait épurer à un degré satisfaisant des effluents sous forme de suspension aqueuse de particules solides du type issue de l'industrie de la micro-électronique, par centrifugation lorsque lesdits effluents sont préalablement traités à la chaux puis avec un agent floculant polymère.

Ils ont ainsi mis en évidence que l'on pouvait s'affranchir de l'utilisation d'un filtre-presse et procéder à une épuration en continu d'effluents contenant une quantité relativement importante de particules solides.

La présente invention va maintenant être décrite plus en détail en référence à la figure unique annexée qui illustre d'une manière schématique le procédé selon l'invention ainsi que les éléments principaux d'une installation pour la mise en oeuvre de ce procédé.

La suspension aqueuse traitée selon l'invention est du type issue de l'industrie de la micro-électronique et contient des particules solides telles que des particules de silice et d'alumine.

Une telle suspension contient généralement de 0,1 % à 10 % en poids de particules solides.

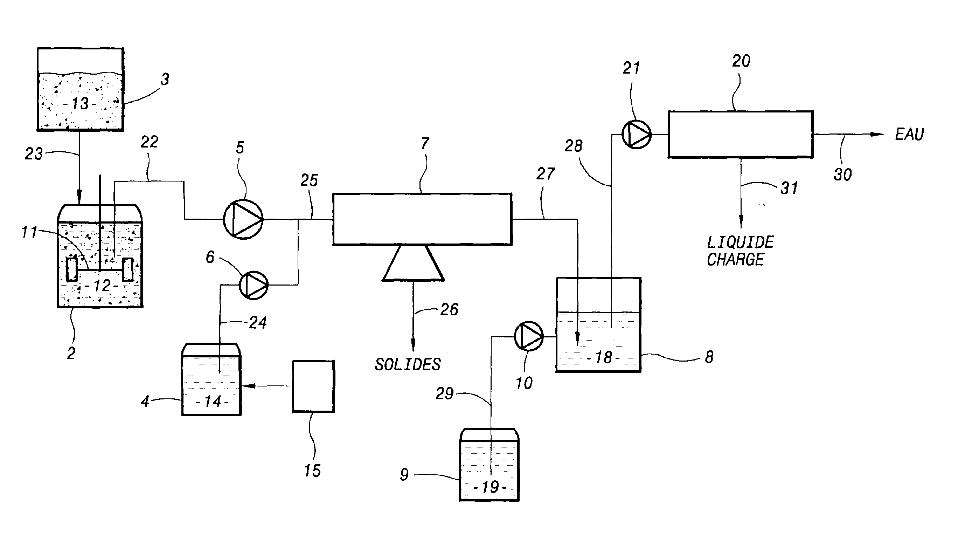

En référence à la figure 1, la suspension aqueuse 12 à épurer selon le procédé de l'invention est contenue dans une cuve 2, munie de moyens d'agitation 11.

Dans une première étape, de la chaux 13 contenue dans une cuve 3 est ajoutée à la suspension aqueuse 12 sous agitation, par la conduite 23.

On ajoute de préférence de la chaux en poudre à raison de 0,1 à 50 g/l de suspension, plus préférentiellement 2 g/l.

On observe une coagulation des particules solides dans la suspension résultante 22.

Le débit de chaux est ajusté par rapport au débit de l'effluent traité pour favoriser la coagulation sans rajouter une quantité trop importante de matières solides dans ledit effluent ou atteindre un pH trop élevé néfaste au traitement ou recyclage ultérieur.

Dans une seconde étape, cette suspension 22, qui est transférée à l'aide d'une pompe volumétrique 5, est additionnée d'agent floculant 14 contenu dans une cuve 4 par la conduite 24 et à l'aide de la pompe volumétrique 6. Le mélange est effectué dans la conduite 25 qui s'étend du refoulement de la pompe 5 à l'entrée de la centrifugeuse.

L'agent floculant utilisé selon l'invention comprend un polymère ou mélange de polymères de type polyacrylamide cationique, non ionique ou anionique, plus préférentiellement cationique.

A titre représentatif de ces polymères, on peut citer ceux vendus sous la référence EM640TRM (polymère polyacrylamide fortement cationique, en émulsion à 40 % de produit actif) ou AN905SH (polymère polyacrylamide faiblement cationique en poudre à 100% de produit actif) par la société FLOERGER, de préférence le polymère en émulsion EM640TRM.

L'installation selon l'invention comprend en outre des moyens 15 de dilution et de préparation (« maturation ») de l'agent floculant. Le polymère sous forme de poudre ou d'émulsion, y est dilué dans l'eau jusqu'à obtenir la concentration en agent floculant recherché, pour être ensuite transféré dans la cuve 4 puis ajouté à la suspension préalablement traitée à la chaux.

La concentration en agent floculant actif après préparation est généralement comprise entre 0,1 et 50 g/l, de préférence 2 g/l.

La quantité d'agent floculant ajoutée par rapport à la suspension traitée est comprise entre 10 g et 50 kg / tonne de matière sèche (TMS), de préférence entre 1 et 5 kg/TMS.

La suspension résultant de cette étape de floculation est ensuite introduite dans une centrifugeuse 7 par la conduite 25. On peut utiliser une centrifugeuse en ligne de type classique.

On opère une séparation de la matière solide à une vitesse généralement comprise entre 2000 et 7000 tr/minutes, de préférence à une vitesse nominale de l'ordre de 4000 tr/minutes.

A l'issue de l'étape de centrifugation, on récupère les sédiments 26 sous forme de pâte blanche assez collante qui présente généralement un taux de matière sèche de l'ordre de 25 % à 30 %. Ces matières solides sont évacuées.

Le liquide séparé ainsi clarifié 18 est récupéré à la sortie de la centrifugeuse 7 par la conduite 27 dans une cuve 8.

Celui-ci présente un taux de matières en suspension totales (MEST) de l'ordre de 10 à 20 mg/l.

Le liquide séparé 18 présente un pH de l'ordre de 11 et peut être ensuite soit rejeté à la station de traitement des effluents comme un quelconque effluent basique, soit recyclé dans d'autres procédés industriels, notamment comme eau de refroidissement après neutralisation ou comme eau ultra-pure dans la boucle d'alimentation du procédé CMP (Chemical Mechanical Planarisation) après traitement dans une centrale adaptée.

La figure illustre le cas où l'effluent épuré récupéré en sortie de centrifugeuse est neutralisé pour être recyclé dans un autre procédé industriel.

Pour cela, on utilise une solution neutralisante 19 contenue dans une cuve 9 qui est introduite dans le liquide séparé 18 par la conduite 29, à l'aide de la pompe volumétrique 10.

La solution neutralisante peut consister en une solution d'acide chlorhydrique définie selon l'effluent à traiter et le pH final requis.

Selon les cas, si l'on souhaite épurer davantage l'effluent 28 résultant, on peut le traiter dans un système d'ultrafiltration 20, auquel il est amené à l'aide d'une pompe 21.

Ce système d'ultrafiltration est de type classique. On rappelle les caractéristiques essentiels de celui-ci :

Le fluide à filtrer circule parallèlement à l'élément filtrant, constitué par une membrane poreuse minérale ou en polymère organique de type connu. Il est soumis à une pression qui entraîne le passage partiel du liquide à travers la membrane. Les particules sont retenues dans la solution dans laquelle leur concentration augmente peu à peu. En sortie de module d'ultrafiltration on récupère ainsi un liquide clarifié constituant le perméat, et un liquide enrichi en particules constituant le concentrat.

Le concentrat 31 est réinjecté en amont, soit dans la cuve 8, soit dans la cuve 2 et le perméat 30 (phase aqueuse de la suspension épurée) est rejeté ou recyclé comme indiqué précédemment.

Le procédé selon l'invention permet de traiter efficacement, en continu, des effluents présentant un taux de particules solides en suspension relativement élevé, en évitant des frais élevés de maintenance de l'installation.

L'invention est illustrée ci-après à l'aide des exemples suivants :

### EXEMPLES

Un effluent constitué d'une suspension aqueuse de particules solides de silice à raison de 1,2 % est traité en ajoutant 1,8 g de chaux par litre de suspension. Cette coagulation permet la formation de petits flocs.

La solution résultante est additionnée d'agent floculant, obtenu en diluant jusqu'à 1 g/l de polymère vendu sous la référence EM640TRM par la société FLOERGER, une émulsion à 40 % de matière active.

On centrifuge cette suspension dans une centrifugeuse GUINARD D1 LC20 à une vitesse de 4500 tr/minutes.

On réalise 5 essais différents en faisant varier le débit de la suspension préalablement traitée à la chaux, le débit de l'agent floculant, la vitesse relative bol/vis de la centrifugeuse.

La vitesse de rotation du bol et la hauteur d'anneau liquide sur la bol ont été fixées à 4500 tr/minutes et 110 mm respectivement.

Les résultats sont rassemblés dans le tableau suivant :

| Essai | 1 | 2 | 3 | 4 | 5 |
|---|---|---|---|---|---|
| Débit de l'effluent traité (I/h) | 600 | 600 | 720 | 720 | 720 |
| Vitesse relative bol/vis (tr/min) | 13 | 5,7 | 7,2 | 4,6 | 5,2 |
| Débit floculant (I/h) | 62 | 62 | 62 | 100 | 40 |
| Siccité du sédiment (%) | 24 | 29 | 23 | 26 | 27 |
| Extrait sec du liquide séparé (mg/l) | 21 | 22 | 12 | 22 | |

Une vitesse relative faible favorise une siccité élevée des sédiments.

## Revendications

1. Procédé pour la séparation des particules solides, notamment des particules de silice et/ou d'alumine, en suspension dans un effluent aqueux (12), caractérisé en ce qu'il comprend les étapes consistant à :
- ajouter de la chaux en poudre (13) à la suspension aqueuse de particules solides ;
- ajouter un agent floculant (14) de type polymère à la suspension aqueuse traitée à la chaux ;
- séparer par centrifugation les particules solides agglomérées de la phase aqueuse ;
- récupérer le liquide séparé (18) résultant de la centrifugation pour produire un effluent épuré ;
- évacuer les particules solides séparées par la centrifugation.

2. Procédé selon la revendication 1, caractérisé en ce que le liquide séparé issu de la centrifugation (18) est neutralisé pour produire un effluent épuré neutralisé (28).

3. Procédé selon la revendication 1 ou 2, caractérisé en ce que l'effluent épuré (28) est soumis à un traitement supplémentaire par ultrafiltration (20).

4. Procédé selon l'une quelconques des revendications précédentes, caractérisé en ce que la suspension aqueuse (12) contient de 0,1 à 10 % en poids de particules solides.

5. Procédé selon l'une quelconque des revendications précédentes, caractérisé en ce que la chaux en poudre (13) est ajoutée à raison de 0,1 à 50 g/l de suspension, de préférence 2 g/l.

6. Procédé selon l'une quelconque des revendications précédentes, caractérisé en ce que l'agent floculant (14) comprend un polymère ou mélange de polymères de type polyacrylamide cationique, non ionique, ou anionique, de préférence cationique.

7. Procédé selon la revendication 6, caractérisé en ce que l'agent floculant est obtenu par dilution à partir d'une émulsion dans l'eau à 40 % de produit actif, ou d'une poudre à 100 % de produit actif, de préférence à partir d'une émulsion.

8. Procédé selon l'une quelconque des revendications 6 et 7, caractérisé en ce que la concentration en agent floculant actif est comprise entre 0,1 et 50 g/l, et est de préférence 2 g/l.

9. Procédé selon l'une quelconque des revendications 6 à 8, caractérisé en ce que la quantité d'agent floculant ajoutée à la suspension traitée est comprise entre 10 g/TMS et 50 kg/TMS, de préférence entre 1 kg/TMS et 5 kg/TMS.

10. Procédé selon l'une quelconque des revendications précédentes, caractérisé en ce que la séparation de la matière solide (26) dans la centrifugeuse (7) est effectuée à une vitesse comprise entre 2000 et 7000 tr/min. de préférence 4500 tr/min.

11. Installation pour la mise en oeuvre du procédé selon l'une quelconque des revendications 1 à 10, caractérisée en ce qu'il comprend :
- une cuve (2) de réception de la suspension aqueuse de solides (12) à traiter, équipée de moyens d'agitation (11);
- une cuve (3) de chaux (13) ;
- des moyens d'amenée (23) de la chaux (13) dans la suspension aqueuse (12) ;
- une cuve (4) contenant un agent floculant (14) polymère ;
- des moyens d'amenée (24 ;6) de l'agent floculant (14) dans la suspension aqueuse (12) traitée à la chaux ;
- une centrifugeuse (7) ;
- des moyens d'amenée (5 ;25) de la suspension aqueuse traitée à la chaux et par l'agent floculant dans la centrifugeuse (7) ;
- une cuve (8) de récupération du liquide séparé (18) ; et
- des moyens de récupération des solides (26) séparés par la centrifugeuse.

12. Installation selon la revendication 11, caractérisée en ce qu'elle comprend une station de dilution et maturation de l'agent floculant polymère, reliée à la cuve (4) contenant cet agent.

13. Installation selon la revendication 11 ou 12, caractérisée en ce qu'elle comprend en outre :
- une cuve (9) de solution de neutralisation (19) ;
- des moyens d'amenée (29 ;10) de la solution de neutralisation (19) dans le liquide séparé (18) issu de la centrifugation.

14. Installation selon l'une quelconque des revendications 11 à 13, caractérisée en ce qu'elle comprend en outre un système d'ultrafiltration (20) ainsi que des moyens d'amenée (28, 21) du liquide séparé (18) audit système d'ultrafiltration (20).
